# EUROPEAN PATENT SPECIFICATION

(11) **EP 0 893 055 B1**
(45) Date of publication and mention of the grant of the patent: **15.01.2003**
(21) Application number: 98120849.9
(22) Date of filing: 11.08.1995
(51) Int. Cl.: A01K 87/00

(54) **Fishing rod**
Angelrute
Canne à pêche

(30) Priority: 12.08.1994 JP 21187494; 06.09.1994 JP 23852694; 14.04.1995 JP 11377395
(43) Date of publication of application: 27.01.1999
(62) Divisional of application: 95112697.8
(73) Proprietor: DAIWA SEIKO INC., Higashikurume-shi, Tokyo (JP)
(72) Inventor: Oda, Hiroshi, Kawagoe-shi, Saitama (JP); Kimura, Shuichi, Akishima-shi, Tokyo (JP); Arata, Hiroshi, Musashimurayama-shi, Tokyo (JP); Ohta, Seiki, Tokyo (JP); Komura, Yasuo, Tokyo (JP)
(74) Representative: Grünecker, Kinkeldey, Stockmair & Schwanhäusser Anwaltssozietät

(56) References cited:
- DE-A- 3 246 801
- FR-A- 980 938
- FR-A- 2 064 581
- FR-A- 2 539 582
- GB-A- 1 159 069
- GB-A- 2 112 612
- US-A- 1 595 275
- US-A- 2 282 618
- US-A- 2 541 609
- DATABASE WPI Section Ch, Week 8737 Derwent Publications Ltd., London, GB; Class A32, AN 87-261273 XP002093778 & JP 62 181728 A (DAIWA SEIKO KK) , 10 August 1986

## Description

The present invention relates to an intra-line fishing rod according to the preamble of independent claim 1.

Such an intra-line fishing rod is known from GB 2 112 612 A. Said fishing rod comprises a rod pipe with an elongated opening. At the outer surface of said rod pipe a separate retainer member which holds a feed eye through which a fishing line will be fed is provided, wherein said retainer member covers said opening. Said feed eye or fishline guide is located at a position spaced from the outer surface of the rod pie. Said feed eye is used for guiding the fishline in order to introduce the same into the rod pipe. The retainer member is shaped like a frame, wherein a web or the like is provided at a top of said line entry member so that a direct entrance of said opening from the outside is prevented. Moreover, the side surfaces of said retainer member are open Thus, said retainer member is provided for fixing said feed eye with respect to said opening, wherein an open region located longitudinally between said feed eye and said elongated opening is defined.

Furthermore, in order to introduce a fishline into said fishing rod, the end of said line is tied through an eye in a line threader and said line threader is then inserted through said feed eye and said elongated opening into the rod pipe. Said line threader is then further moved from said opening which is positioned at a rear section of said rod pipe to a front opening of the same. After said threader has completely passed the front opening of the rod pipe the related fishline is introduced into said rod pipe.

It is an objective of the present invention to provide an intra-line fishing rod as indicted above wherein the handling thereof is facilitated.

According to the present invention, this objective is solved by an intra-line fishing rod with the features of independent claim 1.

Preferred embodiments of the present invention are laid down in the dependent claims.

Hereinafter, the present invention is illustrated and explained in greater detail by means of preferred embodiments in conjunction with the accompanying drawings. In the drawings wherein:
Fig. 1 is a side view of a fishing rod according to a first embodiment,
Fig. 2 is an enlarged longitudinal section view of the main portions of the fishing rod shown in Fig. 1,
Fig. 3 is a longitudinal section view of the main portions of a fishing rod according to the second embodiment,
Fig. 4 is a partially sectional side view of a fishing rod with a line insertion tool according to a third embodiment,
Fig. 5 is a side view showing the line insertion tool in Fig. 9,
Fig. 6 is an enlarged, longitudinally sectional view of the main portions of the fishing rod shown in Fig. 4,
Fig. 7 is an enlarged, transverse sectional view showing the main portion of the fishing rod shown in Fig. 4,
Fig. 8 is an enlarged plane view of the main portion of the fishing rod shown in Fig. 4,
Fig. 9 is a partially sectional view of the main portion of the fishing rod shown in Fig.4 after a fishline is passed therethrough;

Now, description will be given below in more detail of the embodiments of an intra-line fishing rod with reference to the accompanying drawings.

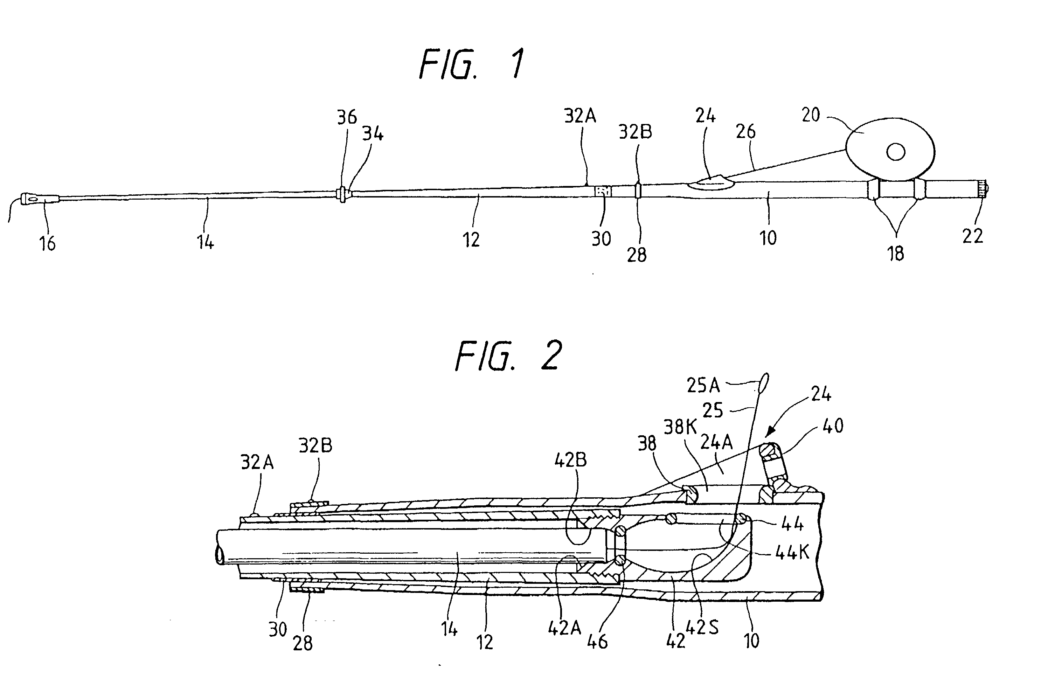

Fig. 1 is a side view of an intra-line fishing rod of a telescopic type, in which a middle rod 12 is jointed to a base rod 10 in a telescopic manner and a top rod 14 is also jointed to the middle rod 12 in a telescopic manner. These three rods are respectively formed of a fiber reinforced resin prepreg or the like. In the rear portion of the base rod 10, there is disposed a reel fixing device 18 for fixing a reel 20, while in the front portion of the base rod 10, there is disposed a fishline introduction guide 24 through which a fishline 26 drawn out from the reel 20 is introduced into the interior of the rod. Further, on the outer periphery of the leading end portion of the base rod 10, there is disposed a metal cap 28 for the purpose of reinforcement and design, while a bottom plug 22 is mounted on the rear end of the base rod 10 through threading engagement.

In the leading end portion of the middle rod 12, a stopper 36 is mounted on a mounting member 34 having a large diameter. Due to this, when the middle rod 12 is stored within the base rod 10 with the fishline 26 remaining inserted, the middle rod 12 can be hung by the leading end portion of the base rod 10 in order to prevent the fishline 26 from being damaged by collision of the rear end of the middle rod 12 against the inner surface of the bottom plug 22. Here, in a featured arrangement of a first embodiment shown in Fig. 2 (which will be described in detail later), the fishline can be protected by a guide member 42, even if the stopper 36 is not provided; but, however, in the other embodiments it is preferable that the stopper 36 is provided for the purpose of protection for the fishline. Also, at a given position in the rear portion of the middle rod 12, there is disposed a rubber hold portion 30 so that the middle rod 12 is slightly increased in the outside diameter in this portion. And, in front of the hold portion 30, there is provided a position indication mark 32A and, if the position indication mark 32A is set to a position indication mark 32B provided on the cap of the base rod 10, then the middle rod 12 can be circumferentially aligned properly with respect to the base rod 10. Further, the top rod 14 includes a top guide 16 in the leading end portion thereof.

Now, Fig. 2 shows the main portions of the first embodiment shown in Fig. 1. In particular, if the middle rod 12 is moved back to a position shown in Fig. 2 where the hold portion 30 of the middle rod 12 is in light contact with the inner surface of the front portion of the base rod 10 and the position indication mark 32A is circumferentially aligned with respect to the mark 32B so that the middle and base rods 12 and 10 are properly set in the circumferential direction, then an opening 44K formed in the side surface of the guide member 42 is allowed to substantially face an opening 38K formed in the fishline introduction guide 24. The guide member 42 can preferably be formed of synthetic resin or the like, and is made in threaded engagement with the rear portion of the middle rod 12. The opening 44K is defined by a guide ring 44 formed of ceramics, and another guide ring 46 formed of ceramics is disposed in a portion of the guide member 42 that communicates with the interior of the middle rod 12. And, there is formed a communication space in the guide member 42 in such a manner that it has a curved surface 42S extending between the two guide rings 44 and 46 and varying smoothly in direction from the longitudinal direction of the middle rod to the direction oriented toward the opening 44K. The guide member 42 in this embodiment is formed as an integral body including the threadedly engageable portion thereof. However, this is not limitative but, alternatively, the guide member 42 and the threadedly engageable portion may be structured as separate parts and, after then, they may be fixedly connected to each other or they may be removably connected to each other. Also, the guide member 42 in this embodiment is formed coaxially with respect to the axis of the middle rod 12, but may be formed eccentric or inclined with respect to the axis of the middle rod 12.

Also, in the front portion of the guide member 42, that is, in the front side portion of the guide ring 46, there is formed a top rod hold portion 42B having such an inside diameter dimension as to be able to retain and hold the rear end portion of the top rod 14. And, in the front end portion of the guide member 42, there is formed an inclined portion 42A which guides the rear end portion of the top rod 14 to smoothly slide into the top rod hold portion 42B.

Further, the opening 38K formed in the fishline introduction guide 24 has an elongated hole shape long in the longitudinal direction of the base rod and is defined by a guide ring 38 formed of ceramics, while the top surface of the introduction guide 24 above the opening 38K is opened. That is, as shown in Fig. 2, two triangular side walls 24A are respectively formed on the two sides of the elongated hole in such a manner to extend along the longitudinal direction thereof, while the top portion of the fishline introduction guide 24 above the opening 38K and between the side walls 24A is opened. Also, on the rear portion of the fishline introduction guide 24, there is provided a second guide ring 40 which has a small diameter and is formed of ceramics. Thus, the fishline is inserted through the second guide ring 40, then through the opening 38K and into the interior of the fishing rod.

In advance of this fishline inserting operation, a fishline inserting member 25 is inserted through the top end (top guide) of the rod and brought into contact with the curved surface 42S of the guide member 42 on the rear end portion of the middle rod 12. The line inserting member 25 is guided by the curved surface 42S and a line catch portion 25A formed in the leading end of the line inserting member 25 is guided outwardly from the opening 38K of the fishline introduction guide 24. In this manner, the fishline 26 can be caught on the line catch portion 25 and, in this state, if the line inserting member 25 is pulled from the top of the rod, then the line inserting operation of the fishline 26 can be achieved simply.

After fishing, the middle rod 12 is stored within the base rod 10 in a telescopic manner. In this case, as shown in Fig. 2, since the fishline introduction guide 24 is not protruded inwardly into the base rod 10 and, in particular, the end face of the guide ring 38 on the inner side of the base rod 10 is formed in such a manner that it is almost identical with the inner wall surface of the base rod 10, the middle rod 12 can be stored beyond the fishline introduction guide 24 rearwardly into the base rod 10 and, if the stopper 36 is not provided, then the middle rod 12 can be stored until it is contacted with the bottom plug 22. In this instance, the hold portion 30 is contacted with the leading end portion of the base rod 10 but only slightly and, therefore, the hold portion 30 raises no inconvenience when the middle rod 12 is stored. The middle rod 12 may be formed so as to have a non-circular section so that a portion of the rod 12 in the circumferential direction thereof can be contacted with the inner surface of the base rod 10. Further, it should be noted here that the hold portion 30 and position indication marks 32A, 32B are not essential to the invention. The fishline introduction guide 24 has an insertion hole having such a dimension as permits the leading end portion or line catch portion 25A of the line insertion member to be guided externally of the rod. Also, if the fishline introduction guide is provided not in the base rod but in a first middle rod to be jointed to the base rod, then the first middle rod (large diameter rod) and a second middle rod (small diameter rod) to be jointed to the first middle rod are designed to have a featured arrangement shown in Fig. 2.

Also, even if the present fishing rod is stored while the fishline 26 remains inserted, the rishline 26 is protected by the guide member 42 and is prevented from being pinched between the middle rod rear end and the bottom plug, which eliminates the danger that the fishline 26 can be held and damaged by them. In addition, in the present embodiment, since the middle rod 12 is hung down by the stopper 36, the fishline 26 can be protected against damage.

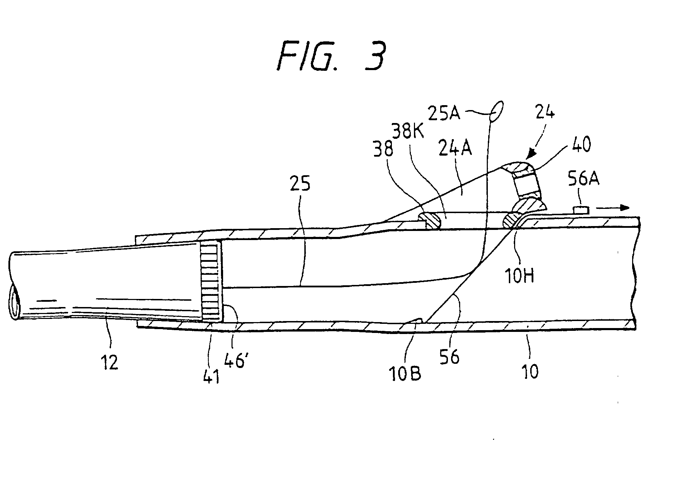

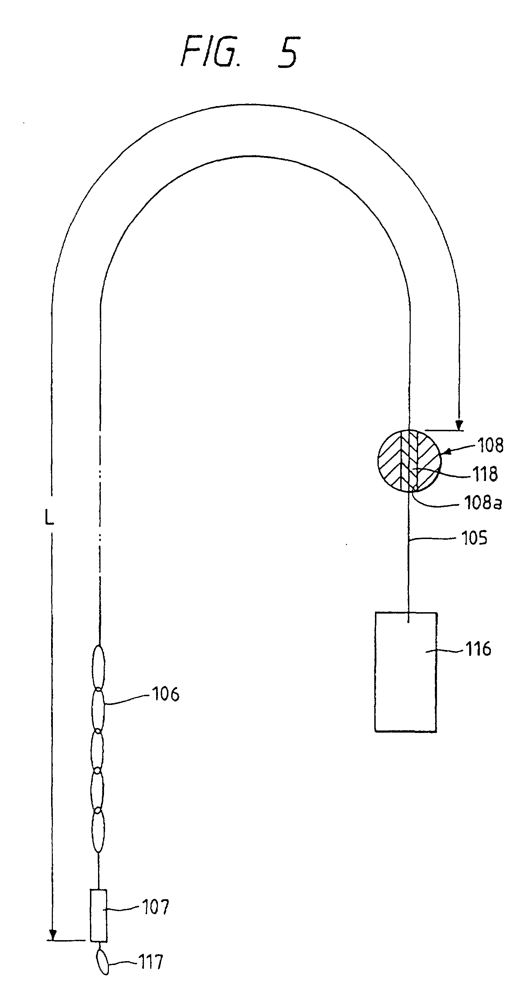

Now, Fig. 3 shows a second embodiment of the main portions of a fishing rod. In the second embodiment, a fishline introduction guide 24 is similar in structure to that shown in Fig. 2, a middle rod 12 includes a plug member 41 mounted to the rear end portion thereof, and a guide ring 46' formed of ceramics is mounted on the rear end of the plug member 41. A base rod 10 includes a hole 10H having such an inclined shape as shown in Fig. 5 and also having a large transverse width, which hole 10H is formed at a position just behind a ceramics guide ring 38 defining an opening 38K formed in the fishline introduction guide 24. And, into the hole 10H, there is inserted a plate-shaped guide member 56 such as a plate spring or the like which can be restorably flexed. The leading end of the plate-shaped guide member 56 can be brought into contact with a positioning portion 10B which is situated in front of the hole 10H and is formed on the inner peripheral surface of the base rod 10 on the opposite side to the opening 38K.

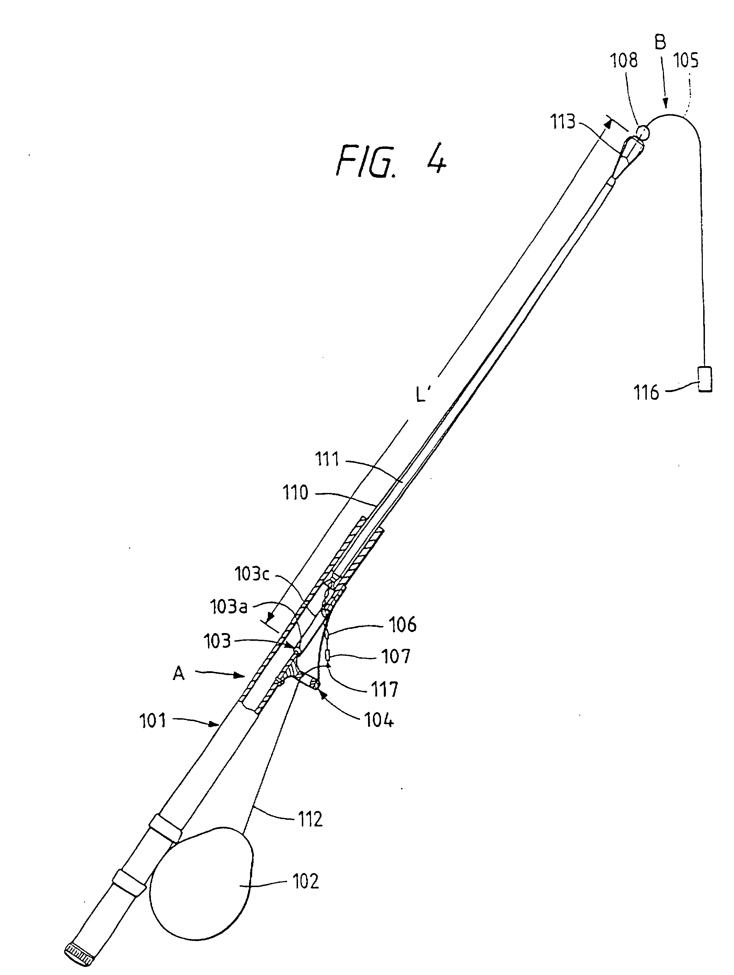

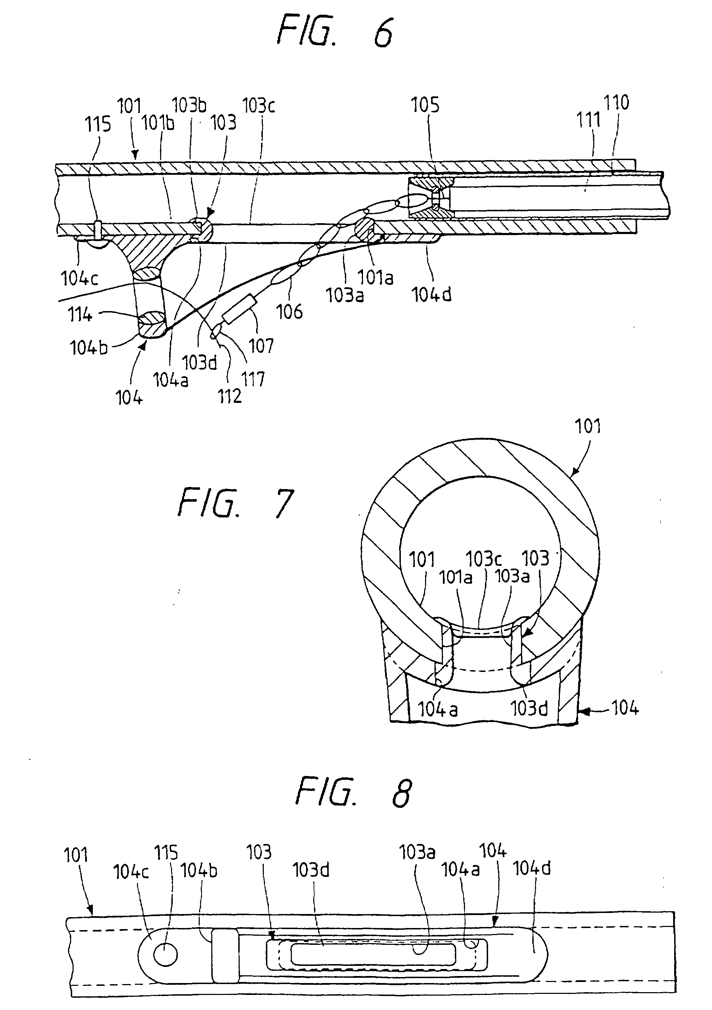

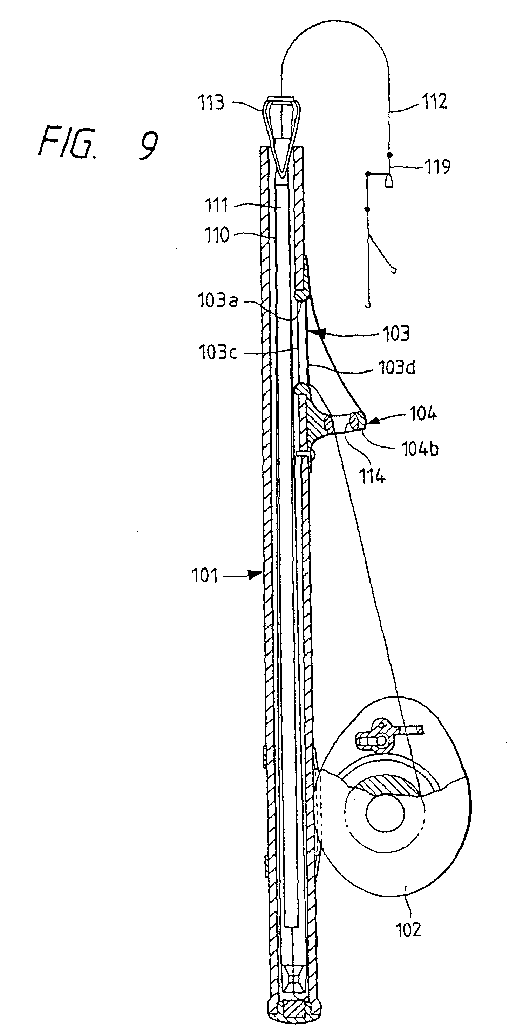

In the present structure, a fishline insertion member 25, which is inserted from the leading end of a top rod, is contacted with a portion of the guide member 56 in the central portion of a base rod interior space and is turned toward the opening 38K by the guide member 56, and a line catch portion 25A of the fishline insertion member 25 is moved externally of the base rod 10, so that the fishline can be inserted into the fishing rod easily with the fishline insertion member 25. To store the fishing rod, if a knob portion 56A provided in the trailing end portion of the guide member 56 is pulled to remove the guide member 56 in a direction of an arrow shown in Fig. 5, then the middle rod 12 can be stored into the base rod 10. To insert the fishline again, the guide member 56 can be inserted into the hole 10H again. The number of the guide member 56 is not limited to one but, alternatively, a plurality of guide members may be used, that is, they may be spread around the central portion of the interior of the base rod through which the fishline insertion member passes, thereby being able to close the interior of the base rod widely. Figs. 4 to 9 show a third embodiment of the intra-line fishing rod. An intra-line fishing rod A comprises a plurality of rods which are jointed to one another in a telescopic manner, that is, a base rod 101, a middle rod 110 disposed in front of the base rod 101, and a top rod 111 disposed in front of the middle rod 110 are jointed to one another in this order (see Fig. 6). In detail, the outer periphery of the joint portion of the middle rod 110 is formed in a tapered manner and is removably jointed to the inner periphery of the joint portion of the base rod 101, while the outer periphery of the joint portion of the top rod 111 is similarly formed in a tapered manner and is removably jointed to the inner periphery of the joint portion of the middle rod 110.

When a fishline 112 wound around a spool of a reel 102 mounted on the base rod 101 is required to be inserted into the interiors of the respective rods 101, 110 and 111, a line insertion tool B is inserted at first from the leading end of fishline guide 113 mounted on the top rod 111.

Each of the respective rods 101, 110 and 111 is structured such that, a prepreg sheet (not shown) cut to a tape-like rectangular shape is wound around a core metal (not shown) a proper number of times, tape is applied onto the outside of the prepreg sheet thus wound, the thus formed assembly is put into a heating furnace, and it is thermally processed into a united body according to a normal processing method.

To produce the prepreg sheet, a woven cloth is reinforced with a high-strength fiber such as carbon fiber, glass fiber, aramide fiber, alumina fiber, Kevler fiber, or other kinds of organic or inorganic fiber, and is then impregnated with thermosetting synthetic resin such as epoxy resin, phenol resin, polyester resin or the like.

The based rod 101 includes in the side surface thereof an elongated hole 101a to which a fishline introduction guide 103 is mounted and fixed, while a fishline guide frame 104 is fixed to the portion of the outer periphery of the base rod 101 situated outside the fishline introduction guide 103.

The fishline introduction guide 103 is formed of hard material such as metal, ceramics or the like.

The fishline introduction guide 103 defines in the central portion thereof a fishline guide hole 103a consisting of an elongated hole having a broad width and long in the axial direction of the base rod 101. Also, the fishline introduction guide 103 further includes on one side of the outside thereof a U-shaped recessed portion 103b into which the edge of the elongated hole 101a of the base rod 101 can be fitted.

The inside 103c of the fishline introduction guide 103 is formed such that it is substantially flush with the inside surface 101b of the base rod 101 or it is situated radially outside with respect to the base rod inside surface 101b.

The outside 103d of the fishline guide hole 103a of the fishline introduction guide 103 is formed open.

The fishline guide frame 104 includes in the central portion thereof a through hole 104a as best shown in Fig. 7, into which the fishline introduction guide 103 can be fitted, and it also includes on one side thereof a stand-up portion 104b as best shown in Fig. 6, to which is fixed a fishline guide 114 formed of hard material such as metal, ceramics or the like.

Also, the fishline guide frame 104 includes a flange portion 104c on the one side thereof, a through hole is formed in the flange portion 104c, and the flange portion 104c is fixed to the base rod 101 by a fixing pin 115 fitted into the through hole.

Further, the fishline guide frame 104 includes on the other side thereof another flange portion 104d which can be fixed to the outer periphery of the base rod 101 by use of a string or the like not shown in the drawing.

Referring now to the structure of the line insertion tool B, a fishline securing member 107 is mounted to one end of a line strip main body 105 through a flexible portion 106, a fixing member 116 is fixed to the other end of the line strip main body 105, and a stop member 108 is fitted with the other end of the line strip main body 105 where the fixing member 116 is fixed in such a manner that the stop member 108 can be stopped at a position properly distant away from the fishline securing member 107.

The line strip main body 105 can be easily and flexibly formed by coating the outer periphery of a stainless steel wire with resin.

In the illustrated embodiment, the flexible portion 106 is formed in such a manner that a plurality of metal rings are connected together and can be freely flexed by the weight of the fishline securing member 107. The flexible portion 106 is made of material the specific gravity of which is 2 or more, preferably 4 or more. The flexible portion 106 may be made of the same material as that of the line strip main body 105, such as stainless steel.

A fishline catch portion 117 formed of a string is fixed to the fishline securing member 107.

The stop member 108 is formed of synthetic resin into a ring with a through hole 108a to which an elastic support member 118 with a through hole is filled.

When the line insertion tool B is inserted through the intra-line fishing rod A, the middle rod 110 is drawn out from the base rod 101 while the top rod 111 is stored in the middle rod 110 as shown in Fig. 4.

Next, the stop member 108 is moved on the line strip main body 105 so that a length L from the fishline catch portion 117 of the line insertion tool B is set substantially equal to a length L' from the leading end of the fishline guide 113 of the top rod 111 to the reel (102) side of the fishline guide hole 103a of the fishline introduction guide 103.

After the line insertion tool B is prepared in the above-described manner, if the fishline securing member 107 of the line insertion tool 3 is inserted into the fishing rod from the leading end of the fishline guide 113 of the top rod 111, then the fishline insertion tool B drops down inside the fishing due to the weight of the fishline securing member and the stop member 108 is contacted with the leading end of the fishline guide 113.

If the stop member 108 is contacted with the leading end of the fishline guide 113, then the fishline securing member 107 is situated at the position of the fishline guide hole 103a of the fishline introduction guide 103. And, if the intra-line fishing rod A is inclined, the flexible portion 106 is flexed due to the weight of the fishline securing member 107 so that the fishline securing member 107 and fishline catch portion 117 are projected out externally from the fishline guide hole 103a of the fishline introduction guide 103.

In this state, the fishline 112 drawn out from the reel 102 is connected to the fishline catch portion 117, the line insertion tool B is pulled up and removed, and terminal tackles 119 are mounted on the fishline 112.

When the line insertion tool B is inserted into the intra-line fishing rod A, the middle rod 110 is drawn out from the base rod 101 while the reel side of the fishing rod A is put downward with the rod top side thereof facing upward and the top rod 111 is stored in the middle rod 110. And, when the line insertion tool B is inserted into the interior of the fishing rod and the fishing rod is inclined, the line insertion tool B drops down inside the fishing rod due to the weight of the fishline securing member 107 and the flexible portion 106 is fixed due to the weight of the fishline securing member 107, so that the fishline securing member 107 and fishline catch portion 117 are projected out externally from the fishline guide hole 103a of the fishline introduction guide 103. Due to this, the fishline 112 can be connected to the fishline catch portion 117 very easily. Also, by drawing out the fishline insertion tool B from inside the fishing rod, it is simple and easy to guide the fishline inside the fishing rod.

The length L of the line insertion tool B from the fishline catch portion 117 to the stop member 108 can be changed by moving the stop member 108 according to the length L' from the leading end of the fishline guide 113 of the top rod 111 to the fishline guide hole 103a of the fishline introduction guide 103.

Since the line insertion tool B is inserted through the intra-line fishing rod A while the reel (102) side of the rod faces downward and the top side of the rod faces upward, the top rod 111 is prevented from projecting out of the fishing rod A. Also, because the heavy reel mounting side of the fishing rod A is set lower than the rod top side thereof, the line insertion tool B can be inserted stably and the top rod 111 is prevented from projecting out and being broken.

Since the inside 103c of the fishline introduction guide 103 is formed to be substantially flush with the rod inside surface 101b or to be situated outside the rod inside surface 101b, when the line insertion tool B is inserted through the fishing rod A, the flexible portion 106 and fishline securing member 107 are prevented from being caught on the inside 103c of the fishline introduction guide 103.

Further, because the outside 103d of the fishline guide hole 103a of the fishline introduction guide 103 is formed open, the fishline securing member 147 and fishline catch portion 117 are easy to be projected externally from the fishline guide hole 103a of the fishline introduction guide 103.

When the intra-line fishing rod A and line insertion tool B are structured in the above-mentioned manner, if the line insertion tool B is inserted through the fishing rod A and the fishing rod A is inclined, then the line insertion tool B drops down due to the weight of the fishline securing member 107 and the flexible portion 106 is flexed due to the weight of the fishline securing member 107, so that the fishline securing member 107 and fishline catch portion 117 are projected externally from the fishline guide hole 103a of the fishline introduction guide 103. Due to this, the fishline 112 can be connected to the fishline catch portion 117 very easily and, simply by drawing out the line insertion tool B from inside the fishing rod, the fishline 112 can be guided into the fishing rod simply and easily.

Since the line insertion tool B is inserted through the intra-line fishing rod A while the reel (102) side thereof faces downward and the rod top side thereof faces upward, the top rod 111 is prevented from projecting out of the fishing rod A. Also, because the heavy reel mounting side of the fishing rod A is set lower than the rod top side thereof, the line insertion tool B can be inserted stably and the top rod 111 is prevented from projecting out and being broken.

## Claims

1. Intra-line fishing rod, comprising:
a large-diameter rod pipe (10, 101) having an elongated hole (38K, 101a);
a fishline guide (40, 114) located at a position spaced from an outer surface of said large-diameter rod pipe (10, 101); and
a frame (24, 104) for fixing said fishline guide with respect to said elongated hole (38K, 101a) so that a fishing line (26, 112) can be inserted into the inside of the large-diameter rod pipe (10, 101) through said elongated hole (38K, 101a) and
said fishline guide (40, 114), said frame (24, 104) is provided above the elongated hole (38K, 101a) defining an opened region located longitudinally between said fishline guide (40, 114) and said elongated hole (38K, 101a) and radially outwardly of said elongated hole (38K, 101a), **characterized in that** a top portion of said fishline guide frame (24, 104) above said elongated hole (38K, 101a) is open.

2. Intra-line fishing rod according to claim 1, **characterized by** a small-diameter rod pipe (110,111) telescopically insertable into said large-diameter rod pipe (101) so that a rear end of said small-diameter rod pipe is located rearwardly of said elongated hole (101a).

3. Intra-line fishing rod according to claim 1 or 2, **characterized in that** said rear end of said small-diameter rod pipe is coupled to a front end of said large-diameter rod pipe (110), and said elongated hole (101a) is located adjacent to said front end.

4. Intra-line fishing rod according to any one of claims 1 to 3, **characterized in that** when a fishing line insertion tool (B) is inserted into said intra-line fishing rod from a tip end thereof, an end of said fishing line insertion tool (B) is positioned to substantially correspond to said elongated hole (101a) and said opened region (104d) facilitates the discharge of said end of said fishing line insertion tool (B) from said elongated hole (101a) radially outwardly of said elongated hole.

5. Intra-line fishing rod according to one of claims 1 to 4, **characterized in that** said fishline guide frame (104) comprises a flange portion (104d) which is fixed to the outer periphery of the base rod (101), said flange portion (104d) having said open region.

## Patentansprüche

1. Innenschnur- Angelrute, mit:
einem Rutenrohr mit großem Durchmesser (10, 101), das ein Langloch (38K, 101a) hat;
einer Angelschnurführung (40, 114), angeordnet an einer von einer Außenoberfläche des Rutenrohres mit großem Durchmesser (10, 101) beabstandeten Position; und
einem Rahmen (24, 104) zum Befestigen der Angelschnurführung in Bezug zu dem Langloch (38K, 101a), so dass eine Angelschnur (26, 112) in das Innere des Rutenrohres mit großem Durchmesser (10, 101) durch das Langloch (38K, 101a) und die Angetschnurführung (40, 114) eingesetzt werden kann, wobei der Rahmen (24, 104) oberhalb des Langloches (38K, 101a), vorgesehen ist, das einen offenen Bereich bestimmt, der längs zwischen der Angelschnurführung (40, 114) und dem Langloch (38K, 101a) und radial außerhalb des Langloches (38K, 101a) angeordnet ist, **dadurch gekennzeichnet, dass** ein oberer Abschnitt des Angelschnurrahmens (24, 104) oberhalb des Langloches (38K, 101a) offen ist.

2. Innenschnur- Angelrute nach Anspruch 1, **gekennzeichnet durch** ein Angelrutenrohr mit kleinem Durchmesser (110, 111), das teleskopartig in das Rutenrohr mit großem Durchmesser (101) einsetzbar ist, so dass ein hinteres Ende des Rutenrohres mit kleinem Durchmesser rückwärts des Langloches (101a) angeordnet ist.

3. Innenschnur- Angelrute nach Anspruch 1 oder 2, **dadurch gekennzeichnet, dass** das hintere Ende des Rutenrohres mit kleinem Durchmesser mit einem vorderen Ende des Rutenrohres mit großem Durchmesser (110) gekuppelt ist, und das Langloch (101a) benachbart zu dem vorderen Ende angeordnet ist.

4. Innenschnur- Angelrute nach irgendeinem der Ansprüche 1 bis 3, **dadurch gekennzeichnet, dass,** wenn ein Angelschnur- Einsetzwerkzeug (B) in die Innenschnur- Angelrute von einem Spitzenende derselben eingesetzt ist, ein Ende des Angelschnur- Einsetzwerkzeuges (B) positioniert ist, um im wesentlichen dem Langloch (101a) zu entsprechen und der geöffnete Bereich (104d) das Entfernen des Endes des Angelschnur- Einsetzwerkzeuges (B) von dem Langloch (101a) radial nach außen des Langloches erleichtert.

5. Innenschnur- Angelrute nach einem der Ansprüche 1 bis 4, **dadurch gekennzeichnet, dass** der Angelschnurführungsrahmen (104) einen Flanschabschnitt (104d) aufweist, der an dem Außenumfang der Basisrute (101) befestigt ist, wobei der Flanschabschnitt (104d) den offenen Bereich aufweist.

## Revendications

1. Canne à pêche à parcours de fil intérieur comprenant :
un tube de canne à grand diamètre (10, 101) comportant un orifice allongé (38K, 101a) ;
un guide de ligne de pêche (40, 114) situé dans une position distante d'une surface externe dudit tube de canne à grand diamètre (10, 101) ; et
un cadre (24, 104) destiné à fixer ledit guide de ligne de pêche par rapport au dit orifice allongé (38K, 101a) de sorte qu'il est possible d'introduire une ligne de pêche (26, 112) à l'intérieur du tube de canne à grand diamètre (10, 101) au travers dudit orifice allongé (38K, 101a) et dudit guide de ligne de pêche (40, 114), ledit cadre est aménagé au-dessus de l'orifice allongé (38K, 101a) qui définit une zone ouverte située de manière longitudinale entre ledit guide de ligne de pêche (40, 114) et ledit orifice allongé (38K, 101a) et radiale vers l'extérieur dudit orifice allongé (38K, 101a),
**caractérisée en ce qu'**une partie supérieure dudit cadre de guidage de ligne de pêche (24, 104) situé au-dessus dudit orifice allongé (38K, 101a) est ouverte.

2. Canne à pêche à parcours de fil intérieur selon la revendication 1, **caractérisée par** un tube de canne à petit diamètre (110, 111) pouvant être introduit de manière télescopique à l'intérieur dudit tube de canne à grand diamètre (101) de telle sorte qu'une extrémité arrière dudit tube de canne à petit diamètre est disposée vers l'arrière dudit orifice allongé (101a).

3. Canne à pêche à parcours de fil intérieur selon la revendication 1 ou la revendication 2, **caractérisée en ce que** ladite extrémité arrière dudit tube de canne à petit diamètre est couplée à une extrémité avant dudit tube de canne à grand diamètre (110), et **en ce que** ledit orifice allongé (101a) est situé à proximité de ladite extrémité avant.

4. Canne à pêche à parcours de fil intérieur selon l'une quelconque des revendications 1 à 3, **caractérisée en ce que**, lorsqu'un outil d'introduction de ligne de pêche (B) est introduit à l'intérieur de ladite canne à pêche à parcours de fil intérieur à partir d'une extrémité de pointe de celle-ci, une extrémité dudit outil d'introduction de ligne de pêche (B) est positionnée de manière à correspondre essentiellement au dit orifice allongé (101a) et ladite zone ouverte (104d) facilite la libération de ladite extrémité dudit outil d'introduction de ligne de pêche (B) à partir dudit orifice allongé (101a) de manière radiale vers l'extérieur dudit orifice allongé.

5. Canne à pêche à parcours de fil intérieur selon l'une quelconque des revendications 1 à 4, **caractérisé en ce que** ledit cadre de guidage de ligne de pêche (104) comprend une partie de bride (104d) qui est fixée sur la périphérie externe de la canne inférieure (101), ladite partie de bride (104d) comportant ladite zone ouverte.
